# EUROPÄISCHE PATENTANMELDUNG

(11) **EP 1 868 159 A1**
(43) Veröffentlichungstag der Anmeldung: **19.12.2007**
(21) Anmeldenummer: 06115505.7
(22) Anmeldetag: 14.06.2006
(51) Int. Cl.: G06T 7/00

(54) **Verfahren zur Aufnahme und Auswertung von Bildsequenzen**

(71) Anmelder: Evotec Technologies GmbH, 40225 Düsseldorf (DE)
(72) Erfinder: Kupper, Jürgen, 22523 Hamburg (DE); Müller, Jürgen, 22523 Hamburg (DE); Hinnah, Silke C., 22457 Hamburg (DE); Daffertshofer, Martin, 25469 Halstenbek (DE)
(74) Vertreter: von Kirschbaum, Alexander

(57) **Zusammenfassung**

Verfahren zur Aufnahme und Auswertung einer Mehrzahl von Bildsequenzen umfassend die folgenden Schritte:
- Aufnahme eines ersten Referenzbildes einer ersten zu analysierenden Probe, wobei das Referenzbild Referenzbilddatenwerte umfasst, die in einem Referenzkoordinatensystem angeordnet sind,
- Bestimmen einer Auswahl von Koordinatenwerten im Referenzkoordinatensystem unter Berücksichtigung von Referenzbilddatenwerten,
- Aufnahme einer ersten Sequenz von Untersuchungsbildern der ersten Probe, wobei das Untersuchungsbild Untersuchungsbilddatenwerte umfasst, die in einem Untersuchungskoordinatensystem angeordnet sind,
- Ermittelung von Bildeigenschaften in der ersten Sequenz von Untersuchungsbildern aus Untersuchungsbilddatenwerten, wobei die Ermittlung zumindest an solchen Koordinaten im Untersuchungskoordinatensystem erfolgt, die der zuvor bestimmten Auswahl von Koordinatenwerten im Referenzkoordinatensystem im Wesentlichen entsprechen.

## Beschreibung

Die vorliegende Erfindung betrifft ein Verfahren und eine Vorrichtung zur Aufnahme und Auswertung von Bildsequenzen.

Kameras, die für die Aufnahme von Sequenzen schnell aufeinander folgender Bilder geeignet sind, sind kommerziell erhältlich. Insbesondere sind eine Reihe von Bildsensoren auf CCD-oder CMOS-Basis verfügbar, die bei typischen Bildauflösungen im Bereich von ca. 500*500 bis zu 2000*2000 Bildpunkten (Pixeln) Bildraten von ca. 100/s bis über 1000/s ermöglichen (z.B. Micron Technology Inc. MT9 M413, Fairchild CCD456, Cypress LUPA-1300). Auf derartigen Sensoren basierende Kameras werden üblicherweise zur Beobachtung einmaliger, schneller Vorgänge eingesetzt, etwa in der Materialprüfung, Ballistik oder Automobiltechnik. Die bei der Aufnahme der Bildsequenz anfallenden großen Datenmengen werden in Form der vollständigen Bilddaten in schnell adressierbaren Zwischenspeichern abgelegt und anschließend an eine Auswerteeinheit übertragen und dort ausgewertet. Die Übertragung und Auswertung benötigen dabei in der Regel ein Vielfaches der eigentlichen Beobachtungszeit.

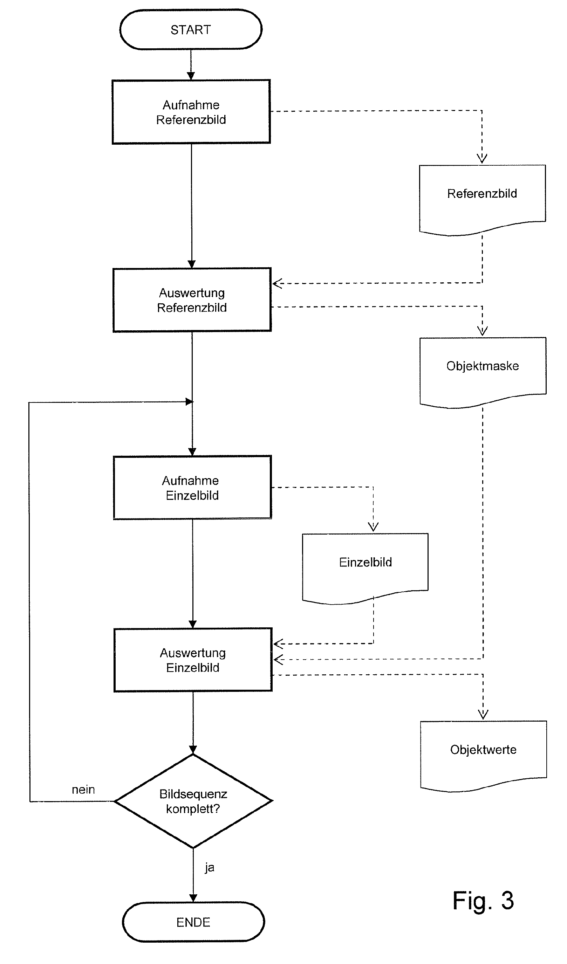

Der Einsatz einer derartigen Kamera an einem Mikroskop zur Aufnahme von Bildsequenzen im 1ms-Takt ist beschrieben bei T. Tanaami et al., Applied Optics Vol. 41, No. 22, August 2002, S. 4704. Auch diese Autoren verwenden die bekannte Anordnung aus Kamera und schnell adressierbarem Zwischenspeicher für die gesamte Bildsequenz (vgl. Fig. 3 sowie Abschnitt 6 der zitierten Arbeit).

Die Analyse kinetischer Vorgänge in biologischen Systemen, insbesondere in Zellen, durch die Aufnahme einer Folge von Bildern ist im Stand der Technik ebenfalls verbreitet. In aller Regel werden dabei relativ niedrige Bildraten, maximal bis zu typischen Video-Raten von 25 oder 30Hz, angewandt. Unabhängig von der Bildrate werden grundsätzlich die gesamten Bilddaten der Sequenz gespeichert und später - in der Regel nach Abschluss einer ganzen Reihe von Messungen - ausgewertet.

EP 1 348 124 B1 beschreibt Verfahren zur Analyse kinetischer Vorgänge in Zellen im Screening durch Aufnahme von Bildsequenzen. Dabei wird spezifisch darauf abgezielt, die räumliche Bewegung der Zellen berücksichtigen zu können, wie sie bei langen Beobachtungszeiten zur Analyse relativ langsamer zellulärer Prozesse auftritt. Die in der EP 1 348 124 B1 offenbarten Ansätze der Bildverarbeitung erfordern eine separate, relativ aufwendige Objekterkennung in jedem aufgenommenen Einzelbild; sie sind also nicht zur Echtzeitanalyse schneller Vorgänge geeignet.

Der Einsatz bildgebender, insbesondere (fluoreszenz-)mikroskopischer, Verfahren hat im Bereich der Life Sciences in den letzten Jahren stark an Bedeutung gewonnen. Insbesondere die Untersuchung biologischer und biochemischer Prozesse in Zellen oder Zellverbünden profitiert von der wesentlich differenzierten Information, die bildgebende Verfahren - beispielsweise im Vergleich zu Messungen der Gesamtfluoreszenz eines Reporters in einer Zellpopulation - liefern.

Andererseits besteht starkes Interesse an der Beobachtung dynamischer Vorgänge in Zellen. So ist beispielsweise die Familie der FLIPR-Reader (Hersteller: Molecular Devices Inc.) spezifisch auf die Beobachtung zeitlicher Veränderungen des Membranpotentials oder intrazellulärer Ionenkonzentrationen ausgelegt. Derartige, für hoch zeitaufgelöste Beobachtungen vorgesehene, Geräte liefern jedoch je Well und Messzeitpunkt nur eine Gesamt-Fluoreszenzintensität.

Es ist wünschenswert, den hohen Informationsgehalt ortsaufgelöster Bilder auch bei der Beobachtung dynamischer Vorgänge zu nutzen. Grundsätzlich geeignete Detektoren stehen kommerziell zur Verfügung (z.B. CMOS-Sensoren, die die Aufnahme von Bildfolgen mit Taktraten bis unter 1 ms erlauben). Der Einsatz derartiger Sensoren ist bislang beschränkt auf die Beobachtung kurzer Zeitabschnitte. Diese Beschränkung beruht auf der Notwendigkeit, sehr große Datenmengen zu erfassen und weiterzuverarbeiten. Beispielsweise ergibt sich folgende Datenrate bei Verwendung einer Kamera mit 1000*1000 Pixeln, einer Digitalisierung der Helligkeitswerte mit 8 bit/Pixel und einer Bildrate von 1000/s: 1.000.000 Pixel/frame * 1000 frames/s * 1 Byte/Pixel = 1 GByte/s. Im Stand der Technik wird dieses Problem dadurch gelöst, dass in die Kamera ein Datenpuffer integriert ist (z.B. 1 bis 4 GByte Speichergröße), der es erlaubt, für eine begrenzte Zeit Bildsequenzen aufzunehmen (bis der Speicher gefüllt ist). Da bereits die Übertragungsschnittstelle zum nachgeordneten PC, der die Bildauswertung oder Langzeitspeicherung übernimmt, eine deutlich kleinere Bandbreite aufweist, benötigt die anschließende Übertragung der Bilddaten an den PC typischerweise ein Vielfaches der Aufnahmedauer. Die daran anschließende Auswertung der Bilddaten benötigt im Allgemeinen eine nochmals vielfach längere Rechenzeit. Dies ist in den etablierten Anwendungen solcher Kameras, bei denen einmalige Ereignisse (beispielsweise Automobil-Crashtests) beobachtet werden, akzeptabel. Bei der Untersuchung zahlreicher Proben in Folge ergibt sich jedoch ein massiv reduzierter Probendurchsatz, da nur ein Bruchteil der Zeit tatsächlich für die Aufnahme von Messdaten genutzt werden kann.

Es ist die Aufgabe der vorliegenden Erfindung, die im Stand der Technik bekannten Nachteile zu überwinden uns insbesondere ein Verfahren und eine Vorrichtung bereitzustellen, welche z.B. viele Bildsequenzen in rascher Folge oder eine Abfolge von Bildsequenzen über einen längeren Zeitraum in einer für den Nutzer akzeptablen Zeit erfassen und verarbeiten kann. Vorzugsweise soll hierbei die benötigte Gesamtdauer für Erfassung und Auswertung der Bilddaten die Summe der eigentlichen Erfassungszeiten nicht wesentlich überschreiten.

Diese Aufgabe wird gelöst durch die in den unabhängigen Ansprüchen niedergelegten Verfahren und Vorrichtungen. Die abhängigen Ansprüche betreffen bevorzugte Ausgestaltungen derselbigen.

Die Erfindung betrifft ein Verfahren zur Aufnahme und Auswertung einer Mehrzahl von Bildsequenzen umfassend die folgenden Schritte:
- Aufnahme eines ersten Referenzbildes einer ersten zu analysierenden Probe, wobei das Referenzbild Referenzbilddatenwerte umfasst, die in einem Referenzkoordinatensystem angeordnet sind,
- Bestimmen einer Auswahl von Koordinatenwerten im Referenzkoordinatensystem unter Berücksichtigung von Referenzbilddatenwerten,
- Aufnahme einer ersten Sequenz von Untersuchungsbildern der ersten Probe, wobei das Untersuchungsbild Untersuchungsbilddatenwerte umfasst, die in einem Untersuchungskoordinatensystem angeordnet sind,
- Ermittelung von Bildeigenschaften in der ersten Sequenz von Untersuchungsbildern aus Untersuchungsbilddatenwerten, wobei die Ermittlung zumindest an solchen Koordinaten im Untersuchungskoordinatensystem erfolgt, die der zuvor bestimmten Auswahl von Koordinatenwerten im Referenzkoordinatensystem im Wesentlichen entsprechen.

Es ist bevorzugt, dass das Referenzkoordinatensystem identisch ist mit dem Untersuchungskoordinatensystem.

Ferner ist bevorzugt, dass eine vorbestimmte Beziehung zwischen Referenzkoordinatensystem und Untersuchungskoordinatensystem besteht, welche einem Koordinatenwert im Referenzkoordinatensystem einen Koordinatenwert im Untersuchungskoordinatensystem zuordnet.

Ebenfalls ist bevorzugt, dass die Ermittlung von Bildeigenschaften in der ersten Sequenz von Untersuchungsbildern aus Untersuchungsbilddatenwerten im Wesentlichen auf solche Koordinaten beschränkt ist, die der zuvor bestimmten Auswahl von Koordinatenwerten im Referenzkoordinatensystem im Wesentlichen entsprechen.

Auch bevorzugt ist, dass innerhalb der zuvor bestimmten Auswahl von Koordinatenwerten im Referenzkoordinatensystem Gruppen gebildet werden.

Bevorzugter Weise ist es so, dass die Gruppen anhand von Koordinatenwerten im Referenzkoordinatensystem und/oder Referenzbilddatenwerten, vorzugsweise Helligkeitswerten, gebildet werden.

Insbesondere ist es bevorzugt, dass eine mathematische Operation an denjenigen Untersuchungsbilddatenwerten erfolgt, deren Koordinaten im Untersuchungskoordinatensystem den Koordinaten im Referenzkoordinatensystem in mindestens einer der zuvor gebildeten Gruppen entsprechen, wobei die mathematische Operation vorzugsweise eine Mittelung oder Integration der Untersuchungsbilddatenwerte umfasst.

In einer bevorzugten Ausführungsform ist es so, dass innerhalb der ersten Sequenz von Untersuchungsbildern der ersten Probe ein erstes Untersuchungsbild aufgenommen wird und hieran Bildeigenschaften ermittelt werden, bevor innerhalb derselben Sequenz ein zweites Untersuchungsbild aufgenommen wird.

Es ist bevorzugt, dass innerhalb der ersten Sequenz von Untersuchungsbildern der ersten Probe eine Mehrzahl von Untersuchungsbildern aufgenommen und zwischengespeichert wird, bevor an diesen Untersuchungsbildern Bildeigenschaften ermittelt werden.

Es ist bevorzugt, dass eine zweite Sequenz von Untersuchungsbildern der ersten Probe oder einer zweiten Probe aufgenommen wird.

Es ist auch bevorzugt, dass die zweite Sequenz von Untersuchungsbildern aufgenommen wird, während an der ersten Sequenz von Untersuchungsbildern Bildeigenschaften ermittelt werden.

Es ist auch bevorzugt, dass die Auswahl von Koordinatenwerten im Referenzkoordinatensystem bestimmt wird, während die erste Sequenz von Untersuchungsbildern der ersten Probe aufgenommen wird.

Die Erfindung betrifft ferner eine Vorrichtung zur Durchführung des erfindungsgemäßen Verfahrens umfassend:
- Mittel zur Aufnahme eines ersten Referenzbildes einer ersten zu analysierenden Probe, wobei das Referenzbild Referenzbilddatenwerte umfasst, die in einem Referenzkoordinatensystem angeordnet sind,
- Mittel zum Bestimmen einer Auswahl von Koordinatenwerten im Referenzkoordinatensystem unter Berücksichtigung von Referenzbilddatenwerten,
- Mittel zur Aufnahme einer ersten Sequenz von Untersuchungsbildern der ersten Probe, wobei das Untersuchungsbild Untersuchungsbilddatenwerte umfasst, die in einem Untersuchungskoordinatensystem angeordnet sind,
- Mittel zur Ermittelung von Bildeigenschaften in der ersten Sequenz von Untersuchungsbildern aus Untersuchungsbilddatenwerten, wobei die Ermittlung zumindest an solchen Koordinaten im Untersuchungskoordinatensystem erfolgt, die der zuvor bestimmten Auswahl von Koordinatenwerten im Referenzkoordinatensystem im Wesentlichen entsprechen.

Es ist bevorzugt, dass die Mittel zur Aufnahme von Referenzbild und/oder Untersuchungsbildern eine Kamera, bevorzugt eine CCD- oder CMOS-Kamera, umfassen.

Es ist auch bevorzugt, dass die Mittel zur Ermittlung von Bildeigenschaften Mikroprozessoren, Signalprozessoren oder Gate-Arrays, vorzugsweise field-programmable Gate-Arrays, umfassen.

Es ist ferner bevorzugt, dass sie Mittel zur Sekundäranalyse der ermittelten Bildeigenschaften umfasst, wobei diese Mittel vorzugsweise Mikroprozessoren umfassen.

Auch bevorzugt ist, dass die Mittel zur Aufnahme der Untersuchungsbilder und die Mittel zur Ermittelung von Bildeigenschaften in einer Einheit integriert sind, welche eine Datenschnittstelle zu den Mitteln zur Sekundäranalyse der ermittelten Bildeigenschaften aufweist.

Insbesondere ist es bevorzugt, dass die Datenschnittstelle derart ausgestaltet ist, dass sie die aus einer Sequenz von Untersuchungsbildern ermittelten Bildeigenschaften innerhalb einer Zeitdauer an die Mittel zur Sekundäranalyse überträgt, die die für die Aufnahme der Sequenz von Untersuchungsbildern benötigte Zeitdauer nicht wesentlich überschreitet.

Ebenfalls bevorzugt ist es, dass die Datenschnittstelle derart ausgestaltet ist, dass eine etwaige Übertragung der vollständigen Untersuchungsbilddatenwerte einer Sequenz von Untersuchungsbildern an die Mittel zur Sekundäranalyse eine Zeitdauer benötigen würde, die die für die Aufnahme der Sequenz von Untersuchungsbildern benötigte Zeitdauer wesentlich überschreitet.

Das erfindungsgemäße Verfahren sowie die zugehörige Vorrichtung ermöglichen, die Datenmengen, d.h. die Untersuchungsbilddaten, bereits unmittelbar während der Aufnahme der Untersuchungsbildsequenz (im folgenden auch als "Bildsequenz" bezeichnet) erheblich zu reduzieren. Sie ermöglichen insbesondere eine im Wesentlichen kontinuierliche Bildaufnahme bei hohen Abtastraten sowie eine entsprechende Weiterverarbeitung der Daten und somit den Einsatz der orts- und zeitaufgelösten Beobachtung in der automatisierten (Hochdurchsatz-)Untersuchung einer Vielzahl von Proben.

Die Grundidee der Erfindung besteht darin, für jede zu untersuchende Probe zunächst ein einzelnes Bild ("Referenzbild") aufzunehmen und dieses einer Bildverarbeitung zu unterziehen. Ergebnis einer solchen Bildverarbeitung können insbesondere eine oder mehrere Masken für im Bild erkannte Objekte sein. Diese einmalig ermittelte Information wird dann bei der Auswertung - oder bereits bei der Aufnahme der Bilddaten (wie dem Auslesen aus der Kamera) - der im folgenden aufgenommenen Untersuchungsbildsequenz herangezogen, um die in jedem Einzelbild (auch als "Untersuchungsbild" bezeichnet) zunächst auf Pixel-Ebene vorliegenden Daten unmittelbar auf eine Objekt-Ebene zu verdichten. Das jeweilige Einzelbild kann unmittelbar nach dieser Operation verworfen werden.

Die Rechenoperationen, die zur Auswertung der Einzelbilder der Bildsequenz wünschenswert sind, sind typischerweise sehr einfach. Beispielweise kann im Referenzbild eine Objekterkennung durchgeführt werden, deren Resultat ein "Maskenbild" ist, das in jedem Pixel statt eines Helligkeitswertes eine Objektnummer desjenigen Objektes enthält, dem dieser Pixel zugeordnet ist. Die Auswertung eines Einzelbildes der Bildsequenz reduziert sich vorzugsweise darauf, zu jedem Pixel die Objektnummer aus dem Maskenbild sowie den Helligkeitswert aus dem Einzelbild zu entnehmen, und für jedes Objekt eine gemittelte oder integrierte Helligkeit aller diesem zugeordneten Pixel im Einzelbild zu berechnen. Derartige einfache Operationen können bei entsprechend effektiver Implementierung so schnell durchgeführt werden, dass Bildaufnahme und Bildauswertung vergleichbar lange dauern.

Vorzugsweise geschieht auch die Objekterkennung im Referenzbild in Echtzeit während der laufenden Messung, besonders bevorzugt noch bevor mit der Aufnahme der Bildsequenz begonnen wird. Dies ermöglicht es, bereits während des laufenden Messbetriebes die Informationen aus jedem Bild der Bildsequenz zu verdichten und das jeweilige Bild zu verwerfen. Es wird also vorzugsweise kein Pufferspeicher für die gesamte an einer Probe aufgenommene Bildsequenz benötigt. Im Idealfall wird jeweils nur das zuletzt ausgelesene Bild gepuffert und in Echtzeit ausgewertet, während das Folgebild belichtet wird.

In einem bevorzugten Anwendungsfall dienen das erfindungsgemäße Verfahren und die zugehörigen Vorrichtung zur Untersuchung kinetischer Abläufe in biologischen Zellen. In einer oder mehreren zu untersuchenden Proben liegen dazu bevorzugt jeweils eine Mehrzahl von Zellen vor. Gegenstand der Analyse können insbesondere zelluläre Potentiale oder Ionenkonzentrationen sein, die über entsprechende umgebungssensitive Farbstoffe (z.B. den Ca-Indikator Fura-2) optisch erfassbar werden. Der optische Ausleseparameter kann hierbei insbesondere die Fluoreszenzintensität bei je einer vorbestimmten Anregungs- und Beobachtungswellenlänge sein, oder das Verhältnis aus zwei Fluoreszenzintensitäten, die bei unterschiedlichen Anregungs- und/oder Beobachtungswellenlängen alternierend oder gleichzeitig erfasst werden ("ratiometric imaging").

Bevorzugte Anwendungsfälle sind darüber hinaus die Erfassung von Veränderungen der elektrischen Signale oder morphologischen Veränderungen in Zellen oder Zellverbünden, etwa Herzmuskelzellen, sowie die Signalausbreitung auf Neuronen. Die Realisierung einiger spezieller Anwendungen wird nachfolgend im Detail angesprochen.

Die zu untersuchenden Vorgänge können spontan auftreten, oder durch externe Stimulation (Triggerung) gezielt ausgelöst und/oder synchronisiert werden. Die Stimulation kann beispielsweise erfolgen durch Einkopplung elektrischer Signale, Einstrahlung optischer Strahlung, Zugabe von chemischen Substanzen über eine Dispensiervorrichtung oder Freisetzung zuvor zugegebener, jedoch eingekapselter Substanzen z.B. über UV-Einstrahlung (photochemische Freisetzung).

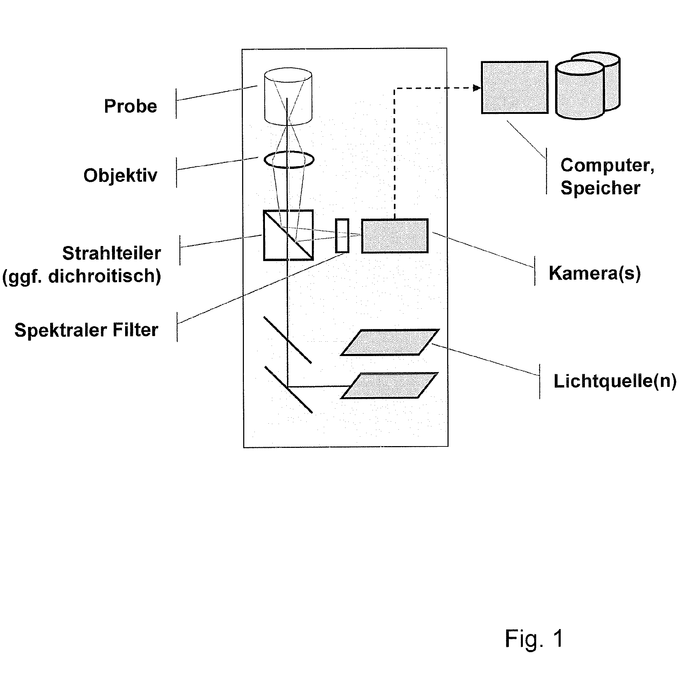

In einer bevorzugten Ausführungsform kommt ein optischer Aufbau zum Einsatz, der im wesentlichen einem im Stand der Technik bekannten (Fluoreszenz-) Mikroskop entspricht (vgl. Fig. 1): Die zu untersuchende Probe wird mit Beleuchtungslicht bestrahlt, dessen Beleuchtungswellenlänge bevorzugt im sichtbaren Bereich des Spektrums, im ultravioletten oder infraroten Bereich liegt. Als Lichtquelle können beispielsweise ein oder mehrere Laser, Leuchtdioden oder Lampen, ggf. mit nachgeordneten Farbfiltern, zum Einsatz kommen. Ein Mikroskopobjektiv erfasst aus der Probe emittierte Strahlung und bildet diese auf eine Kamera ab. Dieses Objektiv kann wahlweise auch zur Lenkung der Beleuchtungsstrahlung auf die Probe genutzt werden (Auflichtmikroskopie); alternativ ist es möglich, die Beleuchtungsstrahlung aus der dem Objektiv gegenüberliegende Raumrichtung auf die Probe zu richten (Durchlichtmikroskopie). Die Kamera kann wahlweise das Licht bei der Beleuchtungswellenlänge erfassen (Streulichtmikroskopie), oder durch vorgeordnete Filter so eingerichtet sein, dass sie ausschließlich Licht anderer Wellenlängen erfasst. Besonders bevorzugt ist der Fall, dass in der Probe befindliche fluoreszente Markierungen bei Anregung durch das Beleuchtungslicht Licht einer längeren Wellenlänge abgeben, und die Kamera für die Erfassung dieses längerwelligen Lichts eingerichtet ist (Fluoreszenzmikroskopie).

Bevorzugt wird als Detektor eine Kamera eingesetzt, die mehrere hundert Bilder pro Sekunde aufnehmen kann. In der Kamera befinden sich bereits Analog/Digital-Wandler, die die Helligkeitswerte der einzelnen Bildpunkte in digitale Zahlenwerte überführen. Optional kann diese Kamera einen Zwischenspeicher enthalten, der die Bildsequenz zunächst puffern kann. Bevorzugt ist die Kamera mit einer Datenschnittstelle ausgestattet, die die Bilddaten mit der vollen Geschwindigkeit, mit der sie bei der Aufnahme einer Bildsequenz anfallen, an eine nachgeordnete Auswerteeinheit übertragen kann.

Geeignet ist beispielsweise die Kamera CMC 1300/C der Firma VDS Vosskühler, Osnabrück. Diese Kamera nimmt Bilder mit einer Ortsauflösung von 1280* 1024 Pixeln bei einer Taktrate bis zu 500 Bildern/s auf. Sie ist mit einer "Camera Link"-Schnittstelle ausgestattet, die über mehrere serielle Übertragungskanäle die Bilddaten in Echtzeit an eine nachgeordnete Einheit, z.B. einen Framegrabber, übertragen kann. Hierbei fallen erhebliche Datenraten an; beispielsweise in der angegebenen Betriebsart: 500 Bilder/s * 1280*1024 Pixel/Bild * 1Byte/Pixel = 655 MByte/s.

### Beispiel: Bevorzugter Messablauf

In einer bevorzugten Ausführungsform wird die oben beschriebene Anordnung in folgendem Messablauf eingesetzt:

### (a) Referenzbild-Aufnahme

Nachdem die zu untersuchende Probe vor dem Objektiv positioniert wurde, wird zunächst ein Referenzbild aufgenommen. Dieses wird an eine Auswerteeinheit, bevorzugt einen handelsüblichen Personal Computer (PC), übertragen, und dort einem Bildverarbeitungsschritt unterzogen. Ziel des Bildverarbeitungsschrittes ist es, die einzelnen im Bildfeld vorhandenen Objekte zu erkennen und sowohl vom Hintergrund (Zwischenräume) als auch voneinander abzugrenzen. Objekte können hier insbesondere die einzelnen in der Probe befindlichen Zellen sein, wahlweise aber auch Substrukturen innerhalb der Zellen; dies wird im Folgenden noch weiter ausgeführt. Zur Objekterkennung können an sich bekannte Bildverarbeitungsverfahren, wie die Segmentierung durch Schwellwertbildung oder den Wasserscheiden-Algorithmus, sowie nachgeordnete Filterung und Klassifizierung anhand von Form- oder Größenkritierien, zum Einsatz kommen. Die im Bild erkannten Objekte werden (in willkürlicher Folge) nummeriert. Im Ergebnis dieser Bildverarbeitung ist zu jedem Bildpunkt bekannt, welchem Objekt er zugehörig ist, bzw. ob er zum Hintergrund gehört. Diese Information wird bei der Verarbeitung der anschließend aufzunehmenden Bildsequenz genutzt. Sie wird im folgenden als "Objektmaske" bezeichnet. Diese entspricht einer Auswahl von solchen Koordinatenwerten im Referenzkoordinatensystem, die Bildpunkte bezeichnen, an denen Objekte (im Gegensatz zum Bildhintergrund) beobachtet wurden.

Optional ist es möglich, die Anzahl der Objekte in der Objektmaske zu begrenzen. Um eine hinreichend gute statistische Qualität der im folgenden zu erfassenden kinetischen Messgrößen zu erhalten, ist es in der Regel wünschenswert, eine gewisse Mindestzahl von Objekten (z.B. Zellen) zu analysieren. Dies gleicht Schwankungen in den biologischen Eigenschaften der einzelnen Zellen aus, und reduziert zusätzlich das statistische Rauschen des optischen Messprozesses selbst. Andererseits steigt mit wachsender Anzahl betrachteter Zellen der Rechenaufwand in der Bildverarbeitung. Durch Toleranzen in der Probenpräparation kann die Anzahl im Bildfeld vorliegender Objekte nur mit einer großen Schwankungsbreite vorhergesagt werden. Es ist jedoch bei der Analyse des Referenzbildes möglich, eine Obergrenze für die Anzahl der zu betrachtenden Objekte, oder auch für die Anzahl der zu Objekten gehörigen Pixel, vorzugeben. Auf diese Weise kann erreicht werden, dass in unterschiedlichen Proben jeweils Messdaten mit vergleichbarer statistischer Qualität bestimmt werden, und dass andererseits der Rechenaufwand für die Bildverarbeitung eine vorbestimmte Obergrenze nicht überschreitet. Letzteres ist insbesondere dann von wesentlicher Bedeutung, wenn die Auswertung in Echtzeit durchzuführen ist, wie im folgenden als bevorzugte Ausführungsform beschrieben.

Das Referenzbild kann bevorzugt bei der gleichen Anregungs- und Beobachtungswellenlänge aufgenommen werden, bei der auch die nachfolgende Bildsequenz aufgenommen wird. In diesem Fall werden die gleichen fluoreszenten Markierungen, die bei der Beobachtung der kinetischen Abläufe genutzt werden, auch zur Lokalisierung der Zellen herangezogen. Dabei wird besonders bevorzugt jedoch eine Belichtungszeit verwendet, die länger ist als die Belichtungszeit für die Einzelbilder der Bildsequenz: Dies ist möglich, da die hohe Zeitauflösung im Referenzbild nicht benötigt wird, und bietet den Vorteil, dass das aufgenommene Bild durch die Integration des Photostroms über längere Zeit ein wesentlich besseres Signal-/Rauschverhältnis aufweisen kann, das die zuverlässigen Lokalisierung der Zellen erlaubt. - Alternativ kann die Lokalisierung der Zellen bei anderen Anregungsund/oder Beobachtungswellenlängen erfolgen, etwa in Streulichtmikroskopie oder, unter Einsatz eines zusätzlichen Fluoreszenzmarkers, der speziell der Lokalisierung der Zellen dient, in Fluoreszenzmikroskopie bei anderen Wellenlängen. Bevorzugt ist hierzu insbesondere der Einsatz der zahlreichen dem Fachmann bekannten Farbstoffe zur spezifischen Anfärbung von Zellkernen, Zytoplasma oder Zellmembranen.

### (b) Aufnahme der Untersuchungsbildsequenz

Im Anschluss an die Aufnahme des Referenzbildes werden eine oder mehrere Bildsequenzen zur Analyse der zellulären Kinetik aufgenommen. In rascher Folge wird eine Vielzahl von Bildern aufgenommen. Die zeitlichen Abstände zwischen den Aufnahmen der Einzelbilder sind bevorzugt konstant gewählt. Es ist aber auch möglich, ein variables Zeitraster für die Aufnahmen zu wählen. Insbesondere ist eine bevorzugte Möglichkeit die Verwendung eines im wesentlichen logarithmischen oder geometrischen Zeitrasters, bei dem sich der zeitliche Abstand zwischen aufeinanderfolgenden Aufnahmen progressiv um einen konstanten Faktor verlängert. Ein derartiges Zeitraster ist besonders geeignet, um Abklingvorgänge effektiv zu erfassen, die im wesentlichen einen exponentiellen Verlauf aufweisen. Gleiches gilt für die Belichtungszeiten der Einzelbilder: Auch hier kann entweder eine konstante oder aber unterschiedliche Belichtungszeiten für die Einzelbilder gewählt werden; insbesondere sind mit einem variablen Raster der Aufnahmezeitpunkte auch entsprechend variierte Belichtungszeiten sinnvoll kombinierbar.

In einer bevorzugten Ausführungsform wird in aufeinanderfolgenden Einzelbildern alternierend jeweils die Fluoreszenzintensität bei zwei unterschiedlichen Beleuchtungsund/oder Beobachtungswellenlängen erfasst. Durch eine spätere Verhältnisbildung der ermittelten Fluoreszenzintensitäten je Zelle kann ein sog. "ratiometric imaging" durchgeführt werden, mit dem z.B. spektrale Verschiebungen in der Fluoreszenzemission eines geeignet gewählten, umgebungssensitiven Farbstoffes erfasst werden können. Beispielhaft sei Casensitive Farbstoff Fura-2 genannt.

Abhängig vom eingangs dargestellten Anwendungsfall wird ggf. zusätzlich ein TriggerEreignis ausgelöst (Reagenz-Zugabe, elektrische oder optische Stimulation). Dies kann unmittelbar oder in definiertem zeitlichen Abstand vor Beginn der Bildsequenz-Aufnahme geschehen. Bevorzugt ist aber insbesondere auch, zunächst die Aufnahme der Bildsequenz zu beginnen und während der laufenden Aufnahme das Trigger-Ereignis auszulösen. In dieser Weise wird für die spätere Bewertung des kinetischen Ablaufs ein Startwert (Nullwert) mit erfasst. Zudem toleriert dieses Vorgehen Unsicherheiten in der zeitlichen Synchronisation zwischen Bildsequenz-Start und Triggerereignis, da in jedem Fall der Triggerzeitpunkt in der Bildsequenz mit erfasst wird.

Die Aufnahme der Bildsequenz wird bevorzugt über eine vorbestimmte Gesamtdauer oder eine vorbestimmte Dauer nach Auslösung des Triggerereignisses durchgeführt. Wird die Auswertung der Bildsequenz in Echtzeit durchgeführt (s. unten), so ist es alternativ möglich, die Aufnahme so lange fortzusetzen, bis ein vorbestimmter Zustand der Probe erreicht ist - etwa das Abklingen eines zeitlich veränderlichen Parameters bis auf einen vorbestimmten Prozentsatz des Ausgangswertes.

Optional können innerhalb der Aufnahmedauer auch mehrere Triggerereignisse ausgelöst werden, beispielsweise an äquidistanten Zeitpunkten. Dies kann einerseits zur Erhöhung des Signal-/Rauschverhältnisses dienen, indem eine Folge von gleichartigen Stimulationen ausgelöst wird, jeweils die Reaktion der Probe erfasst wird und anschließend eine Mittelung über die Mehrzahl von Messkurven durchgeführt wird. In anderen Fällen kann sich die Reaktion der Probe bei wiederholter Stimulation systematisch verändern, und es kann gewünscht sein, diese Veränderungen durch Beobachtung einer Folge von Stimulations/Reaktionszyklen zu erfassen.

### (c) Auswertung

Die Auswertung der aufgenommenen Bilder der Bildsequenz geschieht auf Basis der zuvor bestimmten Objektmaske. Bevorzugt wird in jedem Einzelbild für jedes Objekt ein integrierter oder gemittelter Intensitätswert bestimmt, indem über alle dem Objekt zugehörigen Bildpunkte gemittelt oder integriert wird, und anschließend gespeichert. Das jeweilige Einzelbild kann unmittelbar im Anschluss an diese Ermittlung der Objektwerte verworfen werden. Durch Speicherung der Objektwerte für alle Einzelbilder, die jeweils einem Beobachtungszeitpunkt entsprechen, steht für jedes Objekt eine Zeitreihe von Intensitätswerten zur Verfügung. Diese Vorgehensweise ist in Fig. 3 als Flussdiagramm dargestellt. Durchgehende Pfeile bezeichnen den Ablauf des Algorithmus (Kontrollfluss), gestrichelte Pfeile den Datenfluss. Diese Notation wird auch in den nachfolgenden Flussdiagrammen verwendet.

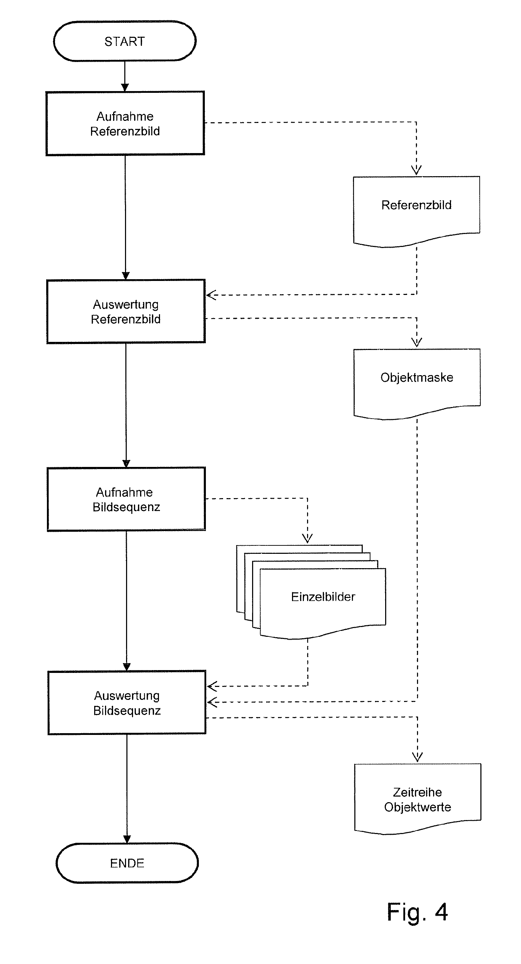

Die Auswertung der Einzelbilder geschieht besonders bevorzugt jeweils unmittelbar nach Aufnahme des Einzelbildes. Dies optimiert den Speicherbedarf, da im Idealfall jeweils nur ein einziges Einzelbild zur Verarbeitung gespeichert werden muss. Bereits während der Belichtung des Folgebildes wird die Liste der Objektwerte bestimmt und das Bild verworfen, um den Speicher für das Folgebild freizugeben. Alternativ ist es jedoch möglich, Pufferspeicher für mehrere Bilder - bis hin zur kompletten Bildsequenz - zur Verfügung zu stellen. Dies erlaubt die zeitliche Entkopplung von Bildaufnahme und Bildverarbeitung. So können einerseits zeitliche Fluktuationen in der Bildverarbeitung aufgefangen werden, falls nicht sichergestellt werden kann, dass jedes Einzelbild innerhalb der Belichtungsdauer des Folgebildes komplett verarbeitet werden kann. Andererseits wird bei Verwendung eines hinreichend großen Pufferspeichers eine Messung auch dann möglich, wenn die Bildverarbeitung regelmäßig länger dauert als die Aufnahme. In diesem Fall wird nach Aufnahme einer Bildsequenz so lange mit der Aufnahme der nächsten Bildsequenz gewartet, bis die Bildverarbeitung aller Einzelbilder abgeschlossen, und somit der Pufferspeicher wieder freigegeben ist (vgl. Fig. 4).

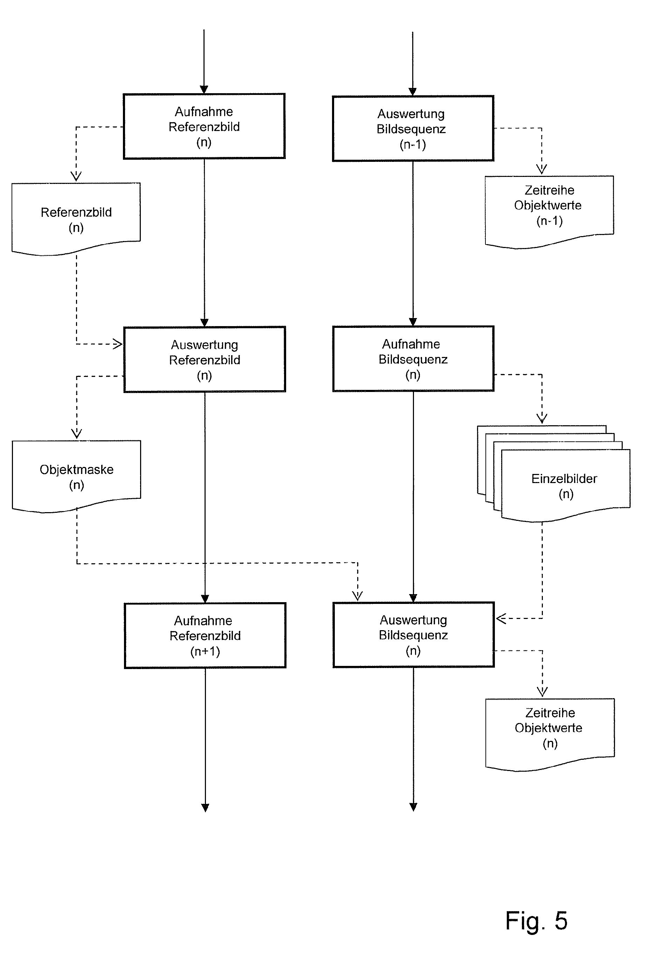

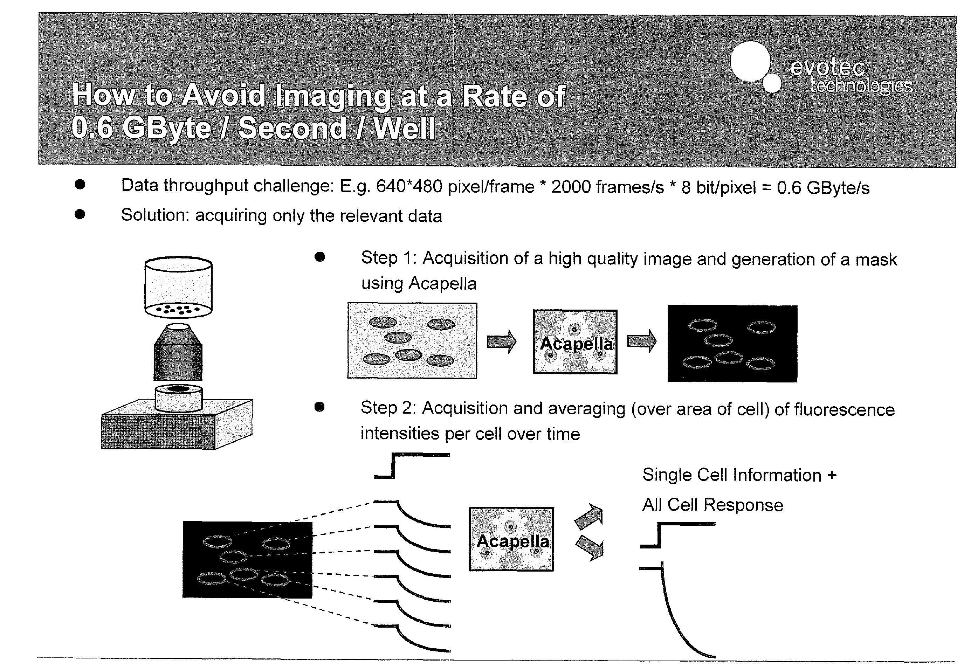

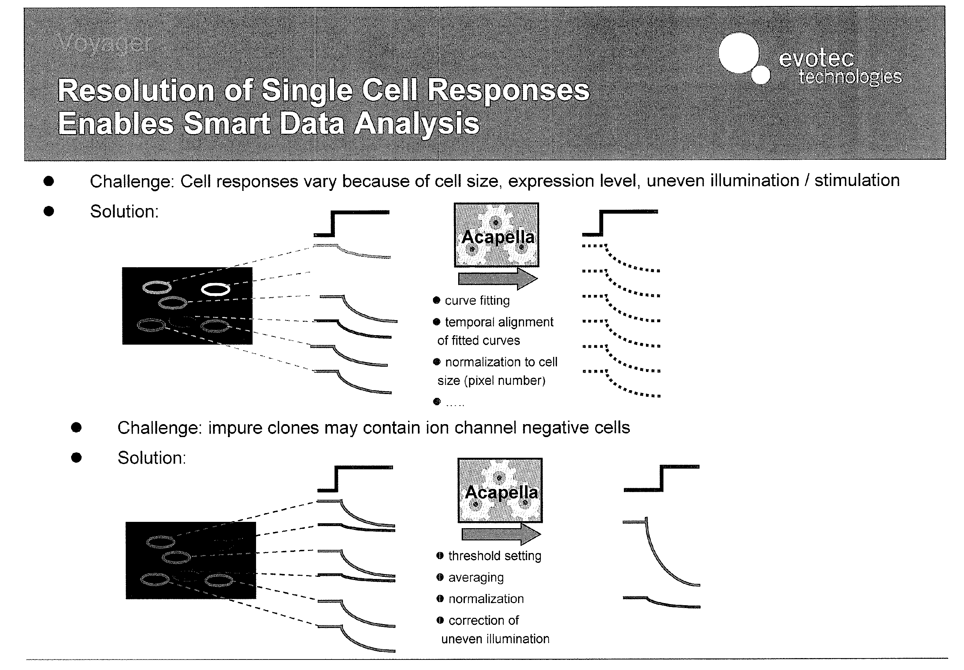

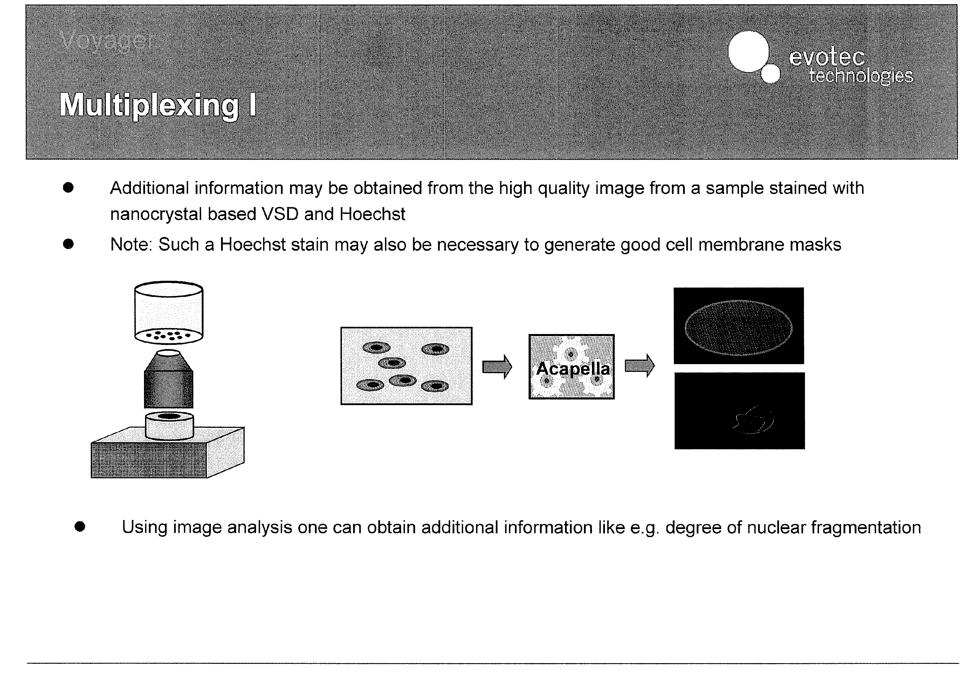

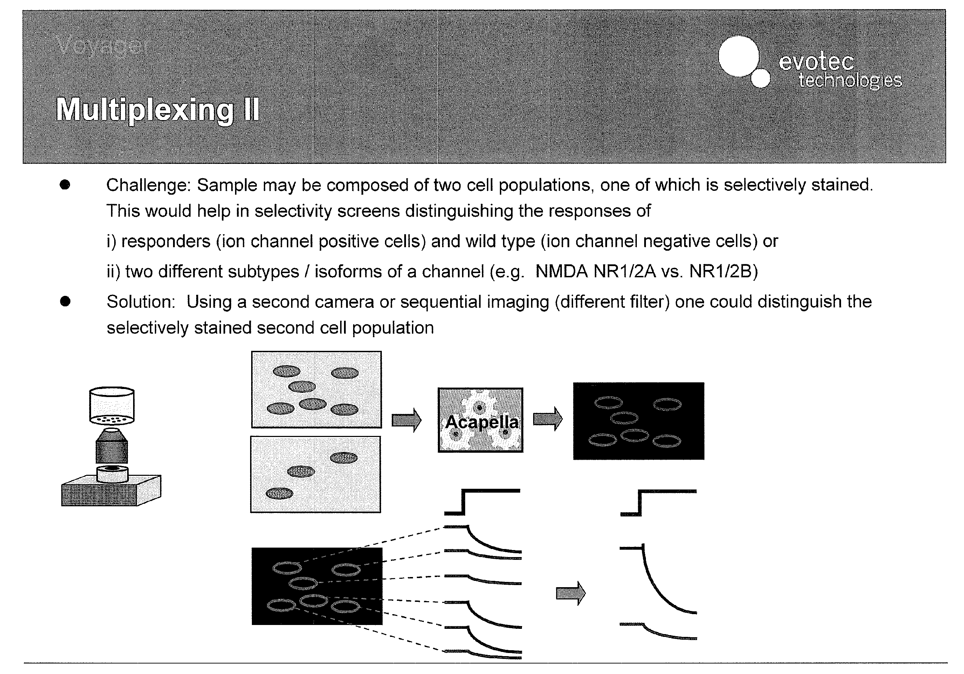

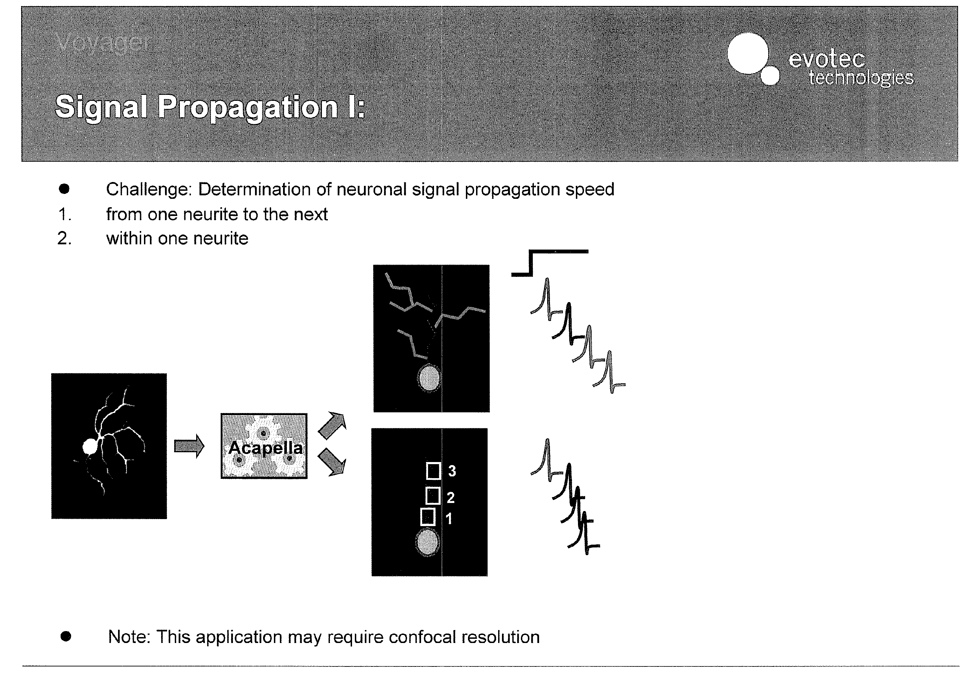

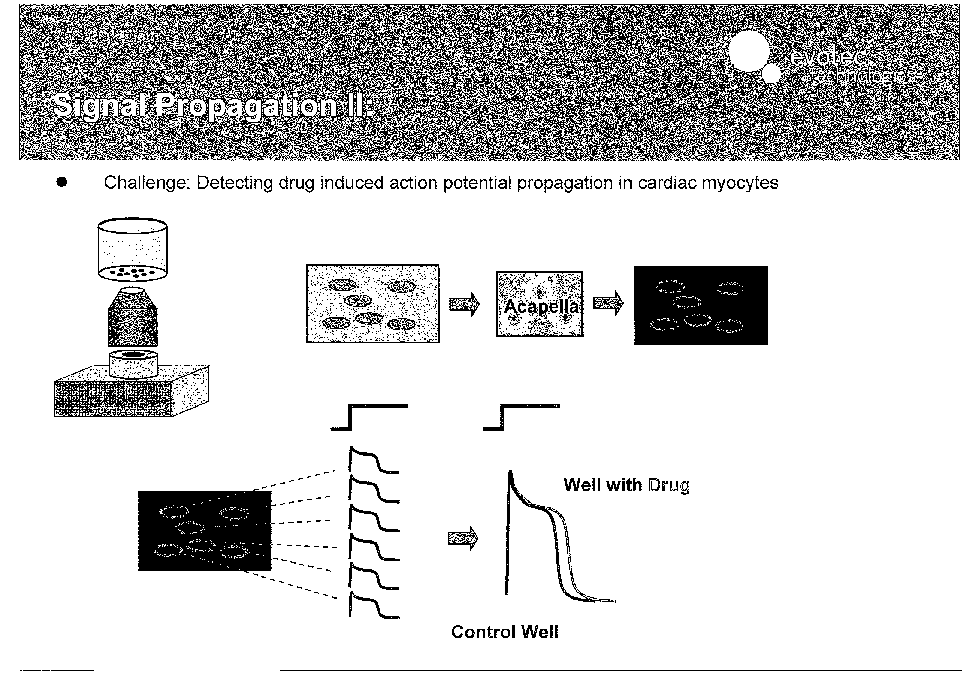

Der Einsatz eines großen Pufferspeichers erlaubt zudem eine besonders bevorzugte Ausführungsform, in der die Gesamtdauer des Mess- und Auswertevorgangs weniger kritisch von der Dauer der Bildverarbeitung des Referenzbildes abhängt. Im vorbeschriebenen Ablauf wurde zunächst davon ausgegangen, dass die die aus dem Referenzbild bestimmte Objektmaske bei Beginn der Aufnahme der Bildsequenz bereits vorliegt. Dies ist notwendig, um die Einzelbilder unmittelbar auf Basis der Objektmaske verarbeiten zu können. Dieses Vorgehen birgt den Nachteil, dass zwischen der Aufnahme von Referenzbild und Bildsequenz die Objekterkennung im Referenzbild abgewartet werden muss. Diese Objekterkennung umfasst in der Regel komplexe Rechenoperationen und dauert auf typischen PCs einige 100 ms bis zu mehreren Sekunden. Diese Zeit kann im Messprozess nicht genutzt werden und verlängert die Gesamtdauer der Messung. Daher ist es erfindungsgemäß besonders bevorzugt, nach der Aufnahme des Referenzbildes und dessen Übertragung an eine erste Auswerteeinheit (z.B. einen PC) unmittelbar mit der Aufnahme der Bildsequenz zu beginnen. Die Bildsequenz wird zunächst in einem Pufferspeicher abgelegt. Die komplette Aufnahmedauer steht für die Analyse des Referenzbildes in der ersten Auswerteeinheit zur Verfügung. Nach Abschluss der Aufnahme der Bildsequenz wird die dann ermittelte Objektmaske an eine zweite Auswerteeinheit übergeben, die mit deren Hilfe die Einzelbilder im Pufferspeicher analysiert. Zeitlich parallel dazu kann bereits die Aufnahme eines neuen Referenzbildes in einer weiteren Probe, sowie dessen Auswertung in der ersten Auswerteeinheit, beginnen. Diese parallelisierte Vorgehensweise ist in Fig. 5 dargestellt.

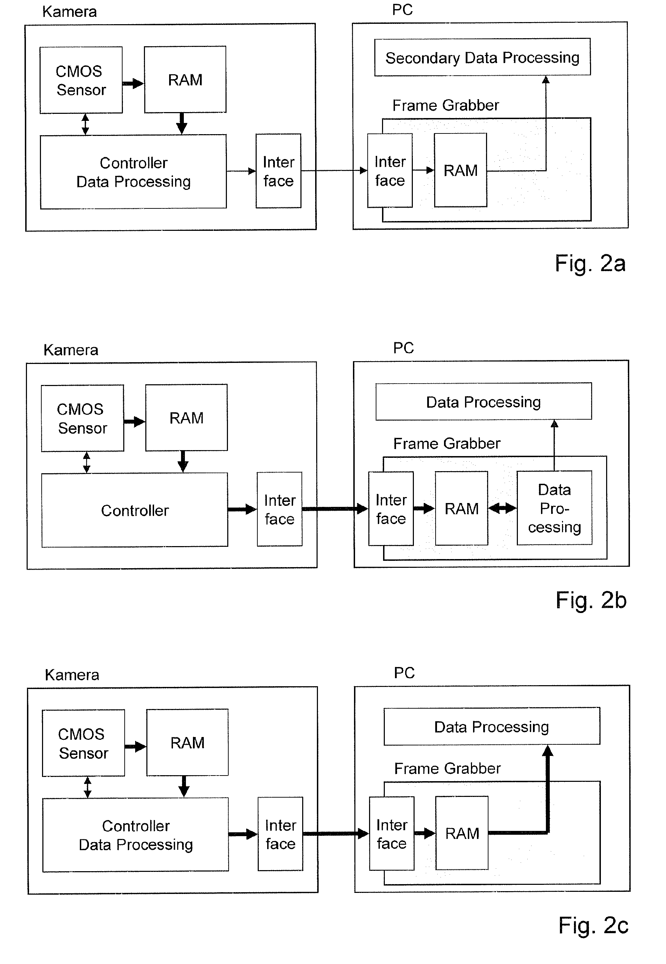

Die Verarbeitung der Bildsequenz geschieht in allen vorbeschriebenen Konstellationen besonders bevorzugt in der Kamera selbst (Fig. 2a). Dies ist möglich, wenn die Kamera eine Logikeinheit mit hinreichender Rechenleistung enthält, etwa einen Signalprozessor oder ein Field Programmable Gate Array (FPGA), wie im Fall der oben benannten CMC 1300/C. Weiterhin setzt dieses Vorgehen voraus, dass die Objektmaske in die Kamera übertragen und dort in einem geeigneten Speicher vorgehalten wird. Der Vorteil dieses Verfahrens ist, dass bereits aus der Kamera anstelle der umfangreichen Bilddaten nur wesentlich kleinere Datensätze (eine Zeitreihe je Objekt) an die nachgeordnete Datenerfassungseinheit übergeben werden. Dies erfordert eine Datenschnittstelle mit geringerer Bandbreite und entlastet die nachgeordnete Einheit, die dann z.B. ein Standard-PC sein kann. In Figur 2a bis 2c zeigen Pfeile den Datenfluss innerhalb des Systems aus Kamera und Auswerteeinheit/PC. Dicke Pfeile entsprechen hohen Datenraten, dünne Pfeile niedrigeren Datenraten.

Besonders bevorzugt ist es, bereits das Auslesen der Bilddaten aus dem Detektor auf die Bereiche zu begrenzen, in denen gemäß der Objektmaske Objekte angeordnet sind. Ein derartiges Vorgehen ist bei geeigneten Detektoren, insbesondere CMOS Bildsensoren, möglich, die das gezielte Auslesen einzelner Bildbereiche zulassen. Beispielhaft sei der CMOS-Bildsensor MT9M413 der Firma Micron Technology Inc. genannt. Dieses erfindungsgemäße Vorgehen erlaubt es, bei gegebener Bandbreite der Auslese-Schnittstelle des Detektors eine höhere Abtastrate der Bildsequenz zu erreichen, da nicht die Daten sämtlicher Bildpunkte des Detektors über die Ausleseschnittstelle übertragen werden müssen. Es ist besonders vorteilhaft einzusetzen in Kombination mit der oben beschriebenen Optimierung der Objektmaske: Bei der Bestimmung der Objektmaske aus dem Referenzbild kann bereits dafür Sorge getragen werden, dass die von der Objektmaske festgelegten Pixelbereiche in einer definierten, nach oben beschränkten Zeit ausgelesen werden können. Dies kann besonders bevorzugt dadurch geschehen, dass die Anzahl der Bildzeilen, in denen zu betrachtende Objekte liegen, beschränkt wird. Dazu werden z.B. solche Objekte aus der Objektmaske nachträglich wieder gelöscht, die sich in Zeilenbereichen befinden, in denen nur wenige Objekte liegen, so dass diese Zeilen beim Auslesen des Detektors ausgelassen werden können.

Alternativ ist es möglich, die vollständigen Bilddaten über eine breitbandige Schnittstelle an eine nachgeordnete Einheit zu übertragen und dort auf Basis der Objektmaske auszuwerten. Bevorzugt ist hier der Einsatz eines sog. Frame Grabbers, d.h. einer Einheit mit Datenschnittstelle, Pufferspeicher und eigener Lokigeinheit zur Durchführung der Auswertung (Fig. 2b). Möglich ist aber auch die Verwendung einer weniger komplexen Einheit, die nur Datenschnittstelle und Pufferspeicher umfasst und in einem PC betrieben wird, der die Auswertung der Einzelbilder übernimmt (Fig. 2c). Bei einer derartigen Lösung wird in der Regel die benötigte Auswertezeit über der Messzeit liegen, so dass sie für Hochdurchsatz-Anwendungen nur eingeschränkt tauglich ist.

### Bevorzugte Anwendungsfälle

Aktionspotentiale sind typische Änderung des Membranpotentials erregbarer Zellen und Gewebe wie z.B. Herzzellen des Herzmuskels oder Nervenzellen des zentralen Nervensystems. Es ist bekannt, dass Medikamentenkandidaten oder aber deren unerwünschte Nebenwirkungen in manchen Fällen die Ausbreitungsgeschwindigkeit von Aktionspotentialen i) innerhalb von Zellen bzw Geweben oder aber ii) zwischen Zellen beeinflussen. In einem speziellen Anwendungsfall dienen das erfindungsgemäße Verfahren und die zugehörigen Vorrichtung zur Messung von Veränderungen der Ausbreitungsgeschwindigkeit einer Membranpotentialänderung. Um diese zum Beispiel in Nervenzellen zu erfassen, müssen subzelluläre Strukturen wie Axone oder Dendriten (gemeinsam auch als Neuriten bezeichnet) während der Objekterkennung erfasst werden. Mit Hilfe der Objekterkennung wird die räumliche Anordnung einzelner Neuritensegmente im Verhältnis zum Zellkörper festgelegt. Dies ermöglicht die in den Neuritensegmenten räumlich und zeitlich versetzte Membranpotentialänderung und somit die Ausbreitungsgeschwindigkeit zu bestimmen.

Neben der Ausbreitungsgeschwindigkeit kann sich in manchen Fällen auch die Kinetik der Membranpotentialänderung, d.h. zum Beispiel die Geschwindigkeit eines Membranpotentialanstiegs (auch Depolarisierung bezeichnet) bzw. Membranpotentialabfalls (auch Hyperpolarisierung bezeichnet) verändern. In einem weiteren speziellen Anwendungsfall dienen das erfindungsgemäße Verfahren und die zugehörigen Vorrichtung zur Messung von Veränderungen der Kinetik einer Membranpotentialänderung. Dabei werden zum Beispiel mit einem spannungssensitiven, fluoreszenten Farbstoff angefärbte Herzmuskelzellkulturen mit einer Medikamentenkandidaten inkubiert. Mittels Objektmasken kann man die Fluoreszenzintensitätsänderungen in der Zellmembran der Herzmuskelzellen erfassen. Daraus lassen sich die Depolarisierungs- bzw. Hyperpolarisierungsgeschwindigkeit der Herzmuskelaktionspotentiale bestimmen und mit der Aktionspotentialkinetik von unbehandelten Herzmuskelzellen vergleichen.

Der Anwendungsfall und die Grundannahme sind demnach entgegengesetzt zu den Randbedingungen der vorliegenden Erfindung, die die Analyse sehr schneller Vorgänge unter der Grundannahme räumlich stationärer Zellen zum Inhalt hat.

## Patentansprüche

1. Verfahren zur Aufnahme und Auswertung einer Mehrzahl von Bildsequenzen umfassend die folgenden Schritte:
- Aufnahme eines ersten Referenzbildes einer ersten zu analysierenden Probe, wobei das Referenzbild Referenzbilddatenwerte umfasst, die in einem Referenzkoordinatensystem angeordnet sind,
- Bestimmen einer Auswahl von Koordinatenwerten im Referenzkoordinatensystem unter Berücksichtigung von Referenzbilddatenwerten,
- Aufnahme einer ersten Sequenz von Untersuchungsbildern der ersten Probe, wobei das Untersuchungsbild Untersuchungsbilddatenwerte umfasst, die in einem Untersuchungskoordinatensystem angeordnet sind,
- Ermittelung von Bildeigenschaften in der ersten Sequenz von Untersuchungsbildern aus Untersuchungsbilddatenwerten, wobei die Ermittlung zumindest an solchen Koordinaten im Untersuchungskoordinatensystem erfolgt, die der zuvor bestimmten Auswahl von Koordinatenwerten im Referenzkoordinatensystem im Wesentlichen entsprechen.

2. Verfahren nach Anspruch 1, **dadurch gekennzeichnet, dass** das Referenzkoordinatensystem identisch ist mit dem Untersuchungskoordinatensystem.

3. Verfahren nach Anspruch 1, **dadurch gekennzeichnet, dass** eine vorbestimmte Beziehung zwischen Referenzkoordinatensystem und Untersuchungskoordinatensystem besteht, welche einem Koordinatenwert im Referenzkoordinatensystem einen Koordinatenwert im Untersuchungskoordinatensystem zuordnet.

4. Verfahren nach einem der vorherigen Ansprüche, **dadurch gekennzeichnet, dass** die Ermittlung von Bildeigenschaften in der ersten Sequenz von Untersuchungsbildern aus Untersuchungsbilddatenwerten im Wesentlichen auf solche Koordinaten beschränkt ist, die der zuvor bestimmten Auswahl von Koordinatenwerten im Referenzkoordinatensystem im Wesentlichen entsprechen.

5. Verfahren nach einem der vorherigen Ansprüche, **dadurch gekennzeichnet, dass** innerhalb der zuvor bestimmten Auswahl von Koordinatenwerten im Referenzkoordinatensystem Gruppen gebildet werden.

6. Verfahren nach Anspruch 5, **dadurch gekennzeichnet, dass** die Gruppen anhand von Koordinatenwerten im Referenzkoordinatensystem und/oder Referenzbilddatenwerten, vorzugsweise Helligkeitswerten, gebildet werden.

7. Verfahren nach Anspruch 5 oder 6, **dadurch gekennzeichnet, dass** eine mathematische Operation an denjenigen Untersuchungsbilddatenwerten erfolgt, deren Koordinaten im Untersuchungskoordinatensystem den Koordinaten im Referenzkoordinatensystem in mindestens einer der zuvor gebildeten Gruppen entsprechen, wobei die mathematische Operation vorzugsweise eine Mittelung oder Integration der Untersuchungsbilddatenwerte umfasst.

8. Verfahren nach einem der vorherigen Ansprüche, **dadurch gekennzeichnet, dass** innerhalb der ersten Sequenz von Untersuchungsbildern der ersten Probe ein erstes Untersuchungsbild aufgenommen wird und hieran Bildeigenschaften ermittelt werden, bevor innerhalb derselben Sequenz ein zweites Untersuchungsbild aufgenommen wird.

9. Verfahren nach einem der vorherigen Ansprüche, **dadurch gekennzeichnet, dass** innerhalb der ersten Sequenz von Untersuchungsbildern der ersten Probe eine Mehrzahl von Untersuchungsbildern aufgenommen und zwischengespeichert wird, bevor an diesen Untersuchungsbildern Bildeigenschaften ermittelt werden.

10. Verfahren nach einem der vorherigen Ansprüche, **dadurch gekennzeichnet, dass** eine zweite Sequenz von Untersuchungsbildern der ersten Probe oder einer zweiten Probe aufgenommen wird.

11. Verfahren nach Anspruch 10, **dadurch gekennzeichnet, dass** die zweite Sequenz von Untersuchungsbildern aufgenommen wird, während an der ersten Sequenz von Untersuchungsbildern Bildeigenschaften ermittelt werden.

12. Verfahren nach einem der vorherigen Ansprüche, **dadurch gekennzeichnet, dass** die Auswahl von Koordinatenwerten im Referenzkoordinatensystem bestimmt wird, während die erste Sequenz von Untersuchungsbildern der ersten Probe aufgenommen wird.

13. Vorrichtung zur Durchführung des Verfahrens nach einem der Ansprüche 1-12 umfassend:
- Mittel zur Aufnahme eines ersten Referenzbildes einer ersten zu analysierenden Probe, wobei das Referenzbild Referenzbilddatenwerte umfasst, die in einem Referenzkoordinatensystem angeordnet sind,
- Mittel zum Bestimmen einer Auswahl von Koordinatenwerten im Referenzkoordinatensystem unter Berücksichtigung von Referenzbilddatenwerten,
- Mittel zur Aufnahme einer ersten Sequenz von Untersuchungsbildern der ersten Probe, wobei das Untersuchungsbild Untersuchungsbilddatenwerte umfasst, die in einem Untersuchungskoordinatensystem angeordnet sind,
- Mittel zur Ermittelung von Bildeigenschaften in der ersten Sequenz von Untersuchungsbildern aus Untersuchungsbilddatenwerten, wobei die Ermittlung zumindest an solchen Koordinaten im Untersuchungskoordinatensystem erfolgt, die der zuvor bestimmten Auswahl von Koordinatenwerten im Referenzkoordinatensystem im Wesentlichen entsprechen.

14. Vorrichtung nach Anspruch 13, **dadurch gekennzeichnet, dass** die Mittel zur Aufnahme von Referenzbild und/oder Untersuchungsbildern eine Kamera, bevorzugt eine CCD- oder CMOS-Kamera, umfassen.

15. Vorrichtung nach Anspruch 13 oder 14, **dadurch gekennzeichnet, dass** die Mittel zur Ermittlung von Bildeigenschaften Mikroprozessoren, Signalprozessoren oder Gate-Arrays, vorzugsweise field-programmable Gate-Arrays, umfassen.

16. Vorrichtung nach einem der Ansprüche 13 bis 15, **dadurch gekennzeichnet, dass** sie Mittel zur Sekundäranalyse der ermittelten Bildeigenschaften umfasst, wobei diese Mittel vorzugsweise Mikroprozessoren umfassen.

17. Vorrichtung nach Anspruch 16, **dadurch gekennzeichnet, dass** die Mittel zur Aufnahme der Untersuchungsbilder und die Mittel zur Ermittelung von Bildeigenschaften in einer Einheit integriert sind, welche eine Datenschnittstelle zu den Mitteln zur Sekundäranalyse der ermittelten Bildeigenschaften aufweist.

18. Vorrichtung nach Anspruch 17, **dadurch gekennzeichnet, dass** die Datenschnittstelle derart ausgestaltet ist, dass sie die aus einer Sequenz von Untersuchungsbildern ermittelten Bildeigenschaften innerhalb einer Zeitdauer an die Mittel zur Sekundäranalyse überträgt, die die für die Aufnahme der Sequenz von Untersuchungsbildern benötigte Zeitdauer nicht wesentlich überschreitet.

19. Vorrichtung nach Anspruch 17 oder 18, **dadurch gekennzeichnet, dass** die Datenschnittstelle derart ausgestaltet ist, dass eine etwaige Übertragung der vollständigen Untersuchungsbilddatenwerte einer Sequenz von Untersuchungsbildern an die Mittel zur Sekundäranalyse eine Zeitdauer benötigen würde, die die für die Aufnahme der Sequenz von Untersuchungsbildern benötigte Zeitdauer wesentlich überschreitet.
